(19) Europäisches Patentamt
European Patent Office
Office européen des brevets

(11) **EP 1 744 469 A2**

(12) **EUROPEAN PATENT APPLICATION**

(43) Date of publication:
**17.01.2007 Bulletin 2007/03**

(51) Int Cl.:
**H04B 7/08** (2006.01)

(21) Application number: **05256659.3**

(22) Date of filing: **27.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.06.2005 JP 2005181757**

(71) Applicant: **Fujitsu Ltd.**
**Kawasaki-shi, Kanagawa 211-8588 (JP)**

(72) Inventor: **Tsutsui, Masafumi,**
**Fujitsu Limited**
**Kawasaki-shi,**
**Kanagawa 211-8588 (JP)**

(74) Representative: **Hitching, Peter Matthew et al**
**HASELTINE LAKE**
**Imperial House**
**15-19 Kingsway**
**London WC2B 6UD (GB)**

(54) **Wireless communication apparatus and phase-variation correction method**

(57)  Disclosed is a wireless communication apparatus having an array antenna constituted by a plurality of antennas ($31_1$ to $31_M$), radio receiving circuits ($32_1$ to $32_M$, which are provided for respective ones of the antennas, for amplifying respective ones of antenna receive signals and applying a frequency conversion to the baseband signals, and a demodulator for demodulating receive data from the baseband signals. A narrow-band-signal extracting unit ($33_1$ to $33_M$) extracts two narrow-band signals, which have the maximum frequency spacing between them, from the baseband signals of each of the antennas, an estimating unit (34) estimates phase variation in each radio receiving circuit using the two narrow-band signals of each antenna, and a phase-variation correcting unit (35) corrects for phase variation in each radio receiving circuit. The estimating unit estimates the direction of signal arrival using narrow-band signals of at least two antennas, a beam former (36) applies receive beam-forming processing to each corrected signal based upon the direction of signal arrival, and a receive-signal processor (37) demodulates receive data from the receive signal that has undergone beam-forming processing.

*FIG. 5*

**Description**

BACKGROUND OF THE INVENTION

This invention relates to a wireless communication apparatus and to a method of correcting for phase variation. More particularly, the invention relates to a wireless communication apparatus having an array antenna constituted by a plurality of antennas, a radio receiving circuit, which is provided for every antenna, for amplifying each antenna receive signal and subjecting baseband signals thereof to a frequency conversion, and a demodulator for demodulating receive data from the baseband signals, and to a method of correcting for phase variation in this apparatus.

A CDMA scheme in a digital cellular wireless communication system using DS-CDMA techniques assigns channels by code so that communication may be performed simultaneously on these channels. However, signals from other communicating channels interfere and, as a result, there is a limit on the number of channels that can communicate simultaneously, i.e., there is a limit on channel capacity. The adaptive array antenna (AAA) is now the focus of attention as it is an effective means of suppressing interference in order to increase channel capacity.

An adaptive array antenna forms a beam directed toward a desired user adaptively in accordance with the environment but nulls the beam with respect to a user who is a major source of interference, thereby making it possible to increase channel capacity. That is, an adaptive array antenna forms a beam in the direction of a desired user and nulls the beam in the direction of user who is a source of much interference, thereby making it possible to receive radio waves from a desired user with a high degree of sensitivity while radio waves from a major interference source are not received. This enables the amount of interference to be reduced and, as a result, enables an increase in channel capacity.

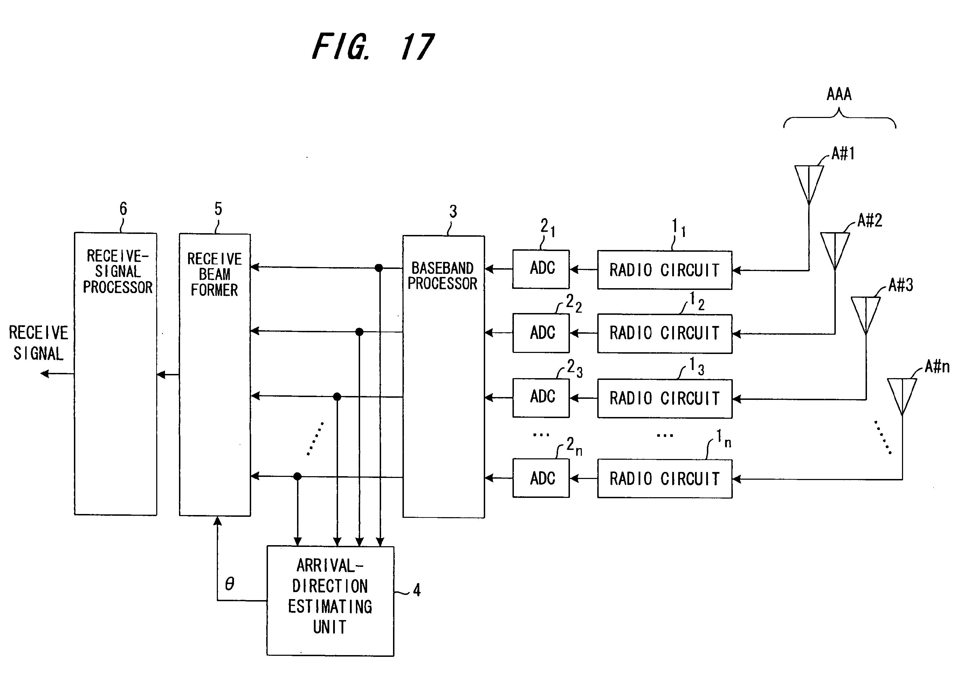

Fig. 17 is a block diagram of a radio receiving apparatus that employs an adaptive array antenna. The adaptive array antenna AAA has antennas A#1 to A#n that receive signals and input these signals to radio circuits $1_1$ to $1_n$, respectively. The radio circuits $1_1$ to $1_n$ amplify the receive radio signals and downconvert these radio signals to baseband signals. AD converters $2_1$ to $2_n$ convert the baseband signals to digital data and input the digital data to a baseband processor 3. The latter executes signal processing for every antenna element and outputs complex receive data in digital form. An arrival-direction estimating unit 4 estimates the arrival direction $\theta$ of a signal using the complex digital receive data of every antenna element. A beam forming device (receive beam former) 5 forms a beam having a peak in the direction of the signal source using the estimated value $\theta$ in the signal arrival direction that enters from the arrival-direction estimating unit 4. That is, the receive beam former 5 extracts the desired signal and sends it to a receive-signal processor 6 while suppressing interference and noise. The receive-signal processor 6 modulates and outputs the receive data upon executing receive processing by a well-known method. Various implementations are available for the receive beam former 5, which directs the beam toward the signal source utilizing arrival-direction information. For example, it is possible to receive a beam oriented in a desired signal-arrival direction by exploiting a beam forming method described in O.L. Frost, "An algorithm for linearly constrained adaptive array processing," Proc. IEEE, vol. 60, no. 8, pp. 926 - 935 (1975), and J. Xin, H. Tsuji, Y. Hase, and A. Sano, "Array beamforming based on cyclic signal detection," Proc. IEEE 48th Vehicular Technology Conference, pp. 890 - 984, Ottawa, Canada (1998).

A radio apparatus using an adaptive array antenna employs radio circuits that differ for every antenna, as described in conjunction with Fig. 17. If the radio circuits have the same amplitude and phase characteristics as one another, no problems arise. Usually, however, these characteristics differ. Owing to this variation in characteristics, each antenna receive signal is imparted with a different amplitude and phase-shift characteristic by the receive circuit. Even if the beam-arrival direction (the direction of the mobile station) is estimated using these signals imparted with different amplitude and phase characteristics, estimation cannot be performed accurately. For this reason, a variety of variation correction techniques referred to as antenna calibration have been proposed.

A first example of this prior art is a method of mixing a reference signal with the receive signal of each antenna (see the specification of Japanese Patent Application Laid-Open No. 2001-156688). This first example of the prior art mixes a reference signal with the receive signal of the antenna, inputs the resultant signal to a radio circuit, extracts the reference signal from the output signal of the radio circuit and obtains the variation of the radio circuit (especially the variation in phase shift) to perform the correction.

A second example of this prior art is a method of using a radio receiving circuit for calibration (see papers of the Institute of Electronics, Information and Communication Engineers, RCS2001-261). According to this example of the prior art, a radio receiving unit is provided with a radio receiving circuit B for calibration in addition to a radio receiving circuit A of each antenna, and the receive signal of the radio receiving circuit A is corrected based upon the characteristic of the radio receiving circuit A of each antenna relative to the radio receiving circuit B for calibration.

A third example of this prior art is a method of deploying in space a beacon station (a radio signal transmitting station for calibration) whose arrival direction is known, measuring a characteristic error of a radio receiving circuit using the signal of the beacon and correcting a communication receive signal based upon the characteristic error.

With the first and second examples of the prior art mentioned above, it is necessary to add on a circuit for injecting the reference signal or the radio receiving circuit for calibration. The third example of the prior art requires the deployment of the beacon station. These items of hardware complicate the system and are not necessarily the best in terms of cost.

## SUMMARY OF THE INVENTION

Accordingly, an object of the present invention is to so arrange it that phase variation in each radio receiving circuit and signal arrival direction can be estimated without adding on a reference-signal insertion circuit, a radio receiving circuit for calibration or a beacon station, etc.

Another object of the present invention is to correct phase variation in each radio receiving circuit based upon an estimated phase variation and improve reception accuracy by carrying out beam forming oriented in the direction of signal arrival.

A further object of the present invention is to implement correction of variation and estimation of arrival direction through a simple arrangement in multicarrier modulation schemes (inclusive of OFDM) viewed as promising in future wireless communications.

The present invention provides a wireless communication apparatus having an array antenna constituted by a plurality of antennas, radio receiving circuits, which are provided for respective ones of the antennas, for amplifying respective ones of antenna receive signals and frequency converting the antenna receiving signals to baseband signals, and a demodulator for demodulating receive data from the baseband signals, as well as to a method of correcting for phase variation in this apparatus.

The wireless communication apparatus according to the present invention comprises a narrow-band-signal extracting unit for extracting narrow-band signals from the baseband signals of each antenna; an estimating unit for estimating phase variation in each radio receiving circuit using the narrow-band signals of each antenna; a correcting unit for correcting for phase variation in each radio receiving circuit and outputting a corrected signal; and a receive-signal processor for demodulating receive data from the corrected signal.

The wireless communication apparatus further comprises an estimating unit for estimating direction of signal arrival using narrow-band signals of at least two antennas; and a beam former for applying receive beam-forming processing to each corrected signal based upon the direction of signal arrival; wherein the receive-signal processor demodulates receive data from the receive signal that has undergone beam-forming processing.

If the system is a multicarrier communication system, the estimating unit uses each carrier signal of the multicarrier or each subcarrier signal of OFDM as the narrow-band signal of each antenna. If the system is wide-band single-carrier system, then the estimating unit uses a narrow-band signal, which has been extracted using filters, as the narrowband signal of each antenna.

In order to improve the accuracy of estimation, the estimating unit uses narrow-band signals of two carriers of maximum frequency spacing as the narrow-band signals of each of the antennas.

Further, in order to improve the accuracy of estimation, the estimating unit obtains phase variations with regard to a plurality of sets of carriers, weights the phase variation of each set based upon the reception signal levels of the carriers, and concludes that the weighted mean value is the true phase variation.

Further, in order to improve the accuracy of estimation, the estimating unit obtains phase variations with regard to a plurality of sets of carriers, weights the phase variation of each set based upon frequency spacing of the carriers, and concludes that the weighted mean value is the true phase variation.

Further, in a case where the radio receiving circuits have a frequency characteristics in wide-band transmission, the estimating unit partitions subcarriers into a plurality of frequency regions the frequency characteristics whereof are regarded as being substantially uniform, and corrects for the phase variation of the radio receiving circuits and estimates the arrival direction for every region into which the subcarriers have been partitioned.

A method of correcting for phase variation in the radio receiving circuit according to the present invention comprises: a step of extracting narrow-band signals from the baseband signals of each antenna; a step of estimating phase variation in each radio receiving circuit using the narrow-band signals of each antenna; and a step of correcting for phase variation in each radio receiving circuit by subjecting an output signal of each radio receiving circuit to a phase correction having a phase opposite that of the phase variation.

The method further comprises the steps of estimating direction of signal arrival using narrow-band signals of at least two antennas; applying receive beam-forming processing to each corrected signal based upon the direction of signal arrival; and demodulating receive data from the receive signal that has undergone beam-forming processing.

In accordance with the present invention, narrow-band signals are extracted from baseband signals antenna by antenna, the phase variation of each radio receiving circuit is estimated using the narrow-band signals of each antenna, and phase is corrected for so as to invert the phase of the phase variation, thereby correcting for phase variation in each radio receiving circuit. As a result, it is unnecessary to add on special circuits for estimating phase variation, as is required in the prior art, and therefore phase variation in each radio receiving circuit can be estimated and corrected for through a simple arrangement.

Further, in accordance with the present invention, direction of signal arrival is estimated using narrow-band signals of at least two antennas, receive beam-forming processing is applied to each phase-variation-corrected signal based upon the direction of signal arrival, and receive data is demodulated from each receive signal that has undergone beam-forming processing. This makes it possible to improve reception accuracy.

Further, the present invention is such that each carrier signal of a multicarrier or each subcarrier signal of OFDM is used as the narrow-band signal of each antenna if the system is a multicarrier communication system. If the system is a wide-band single-carrier system, a narrow-band signal that has been extracted using a filter can be used. As a result, regardless of whether the system is for multicarrier communication or wide-band single-carrier transmission, phase variation of each radio receiving circuit and direction of signal arrival can be estimated and reception accuracy can be improved by correcting for variation and executing beam-forming processing.

Further, in accordance with the present invention, the accuracy of phase-variation estimation can be improved as well as the accuracy of reception by (1) using narrow-band signals of two carriers of maximum frequency spacing as the narrow-band signals of each of the antennas, or (2) obtaining phase variations with regard to a plurality of sets of carriers, weighting the phase variation of each set based upon the reception signal levels of the carriers, and adopting a weighted mean value as true phase variation, or (3) obtaining phase variations with regard to a plurality of sets of carriers, weighting the phase variation of each set based upon frequency spacing of the carriers, and concluding that the weighted mean value is the true phase variation.

Further, in accordance with the present invention, in a case where radio receiving circuits have frequency characteristics in wide-band transmission, the estimating unit partitions subcarriers into a plurality of frequency regions the frequency characteristics whereof are regarded as being substantially uniform, and corrects for the phase variation of the radio receiving circuit and estimates the arrival direction for every region into which subcarriers have been divided. As a result, the accuracy of phase-variation estimation can be improved as well as the accuracy of reception

Other features and advantages of the present invention will be apparent from the following description taken in conjunction with the accompanying drawings.

## BRIEF DESCRIPTION OF THE DRAWINGS

Fig. 1 is a diagram useful in describing the principles of variation correction and estimation of arrival direction according to the present invention;

Fig. 2 is a diagram useful in describing delay caused by placement of an array antenna;

Fig. 3 is a diagram illustrating the relationship between frequency of a receive signal and amount of phase shift;

Fig. 4 is a diagram useful in describing the principles of variation correction and estimation of arrival direction in a general case where the number of antennas is M and the number of carriers is N;

Fig. 5 is a diagram illustrating the structure of a radio receiving apparatus according to a first embodiment of the present invention;

Fig. 6 is a diagram illustrating the structure of a radio receiving apparatus according to a second embodiment of the present invention;

Fig. 7 is a diagram useful in describing a method of improving estimation accuracy in a system of four carriers and two antennas;

Fig. 8 is a diagram useful in describing a method of improving estimation accuracy in a system of N carriers and M antennas;

Fig. 9 is a block diagram illustrating an embodiment of a unit for estimating phase variation and arrival direction in a method of finding a simple mean;

Fig. 10 is a block diagram illustrating an embodiment of the unit for estimating phase variation and arrival direction, the unit performing weighting that conforms to reception level and then averaging;

Fig. 11 is a block diagram illustrating an embodiment of a unit for estimating phase variation and arrival direction, the unit performing weighting that conforms to the frequency spacing of a combination and then averaging;

Fig. 12 is a diagram useful in describing the principles of a third embodiment of the present invention;

Fig. 13 is a diagram illustrating the structure of a radio receiving apparatus according to the third embodiment;

Fig. 14 illustrates an example of the structure of a correcting unit corresponding to a radio receiving circuit;

Fig. 15 is a diagram useful in describing principles in a case where the present invention is applied to a single-carrier signal;

Fig. 16 illustrates an embodiment in which the present invention is applied to single-carrier signal; and

Fig. 17 is a diagram illustrating the structure of a radio receiving apparatus that employs an adaptive array antenna.

## DESCRIPTION OF THE PREFERRED EMBODIMENTS

(A) Principles of the present invention

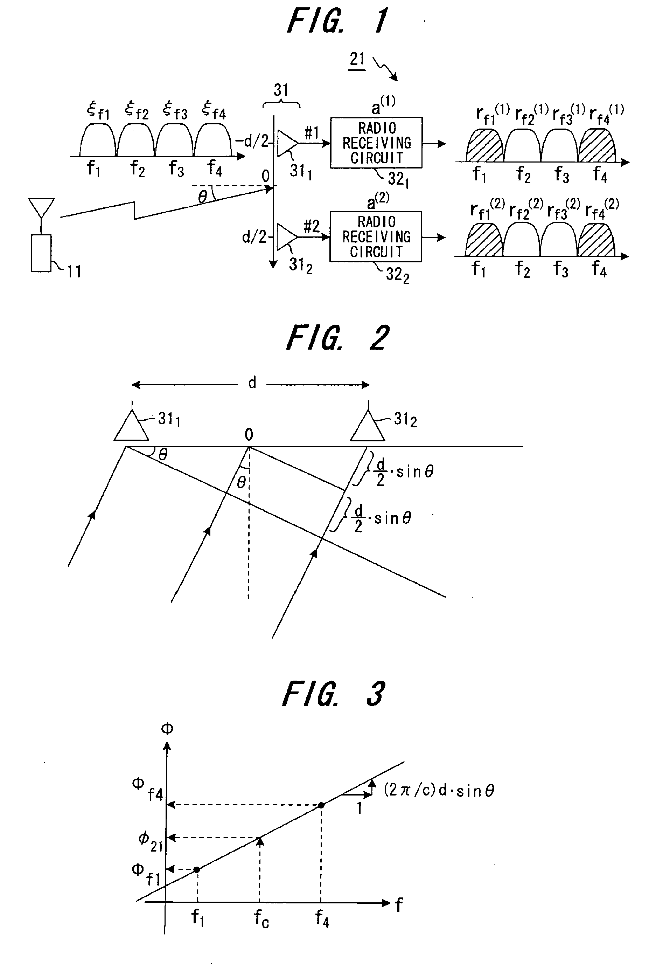

Fig. 1 is a diagram useful in describing the principles of variation correction and estimation of arrival direction according to the present invention. This is for a case where the number of carriers is four and the number of antennas is two. Reference numerals 11 and 21 respectively denote a mobile station and a base station, which has an array antenna. A radio signal having four multicarriers of baseband frequencies $f_1$, $f_2$, $f_3$, $f_4$ from the mobile station 11 impinges upon the linear array antenna (where the number of antennas is two) 31 of the base station 21 at an angle θ. Antennas $31_1$, $31_2$ of the array antenna input the receive signals to radio receiving circuits $32_1$, $32_2$, respectively, and the radio receiving circuits $32_1$, $32_2$ convert the received radio signals to baseband signals of the frequencies $f_1$, $f_2$, $f_3$, $f_4$ and outputs the baseband signals.

Let $\xi_{f1}$, $\xi_{f2}$, $\xi_{f3}$, $\xi_{f4}$ represent the propagation-path fading characteristics with respect to the frequencies $f_1$, $f_2$, $f_3$, $f_4$, let $r_{f1}{}^{(1)}$, $r_{f2}{}^{(1)}$, $r_{f3}{}^{(1)}$, $r_{f4}{}^{(1)}$ represent the baseband signals of the frequencies $f_1$, $f_2$, $f_3$, $f_4$ that are output from the radio receiving circuit $32_1$, let $r_{f1}{}^{(2)}$, $r_{f2}{}^{(2)}$, $r_{f3}{}^{(2)}$, $r_{f4}{}^{(2)}$ represent the baseband signals of the frequencies $f_1$, $f_2$, $f_3$, $f_4$ that are output from the radio receiving circuit $32_2$, and let the amplitude and phase characteristics of the radio receiving circuits $32_1$, $32_2$ be expressed respectively as follows:

$$a^{(1)}, a^{(2)}$$

If the number of antennas that construct the array antenna 31 is two, beam arrival direction θ can be obtained from the baseband signals $r_{f1}{}^{(1)}$, $r_{f4}{}^{(1)}$ and the baseband signals $r_{f1}{}^{(2)}$, $r_{f4}{}^{(2)}$ of the two frequencies $f_1$ and $f_4$ among the four frequencies $f_1$ to $f_4$. More specifically, in the case of two antennas, the beam arrival direction θ can be found if there are a minimum of two carrier signals. Accordingly, if we focus our attention on the baseband signals $r_{f1}{}^{(1)}$, $r_{f4}{}^{(1)}$ that are output from the radio receiving circuit $32_1$ and the baseband signals $r_{f1}{}^{(2)}$, $r_{f4}{}^{(2)}$ that are output from the radio receiving circuit $32_2$, these signals can be expressed by the following equations:
$$r_{f1}{}^{(1)} = \xi_{f1} \cdot \exp\{j\frac{2\pi f_1}{c}(-d/2)\sin\theta\} \cdot a^{(1)} \qquad \ldots (1)$$

$$r_{f4}{}^{(1)} = \xi_{f4} \cdot \exp\{j\frac{2\pi f_4}{c}(-d/2)\sin\theta\} \cdot a^{(1)} \qquad \ldots (2)$$

$$r_{f1}{}^{(2)} = \xi_{f1} \cdot \exp\{j\frac{2\pi f_1}{c}(d/2)\sin\theta\} \cdot a^{(2)} \qquad \ldots (3)$$

$$r_{f4}{}^{(2)} = \xi_{f4} \cdot \exp\{j\frac{2\pi f_4}{c}(d/2)\sin\theta\} \cdot a^{(2)} \qquad \ldots (4)$$

where c represents the velocity of light. Equation (1) indicates that the baseband signal is influenced by fading $\xi_{f1}$, that a phase delay of

$$\frac{2\pi f_1}{c}(-d/2)\sin\theta$$

is produced by the placement of the array antenna, and that the radio receiving circuit $32_1$ exhibits the amplitude and phase characteristic

$a^{(1)}$

The same can be considered to hold true for Equations (2) to (4). Fig. 2 is a diagram useful in describing delay ascribable to the placement of the antenna array. If we let d represent the distance between antennas and $\theta$ the beam incidence angle, the difference between the distance from the mobile station 11 to midpoint O between the antennas and the distance from the mobile station 11 to the antennas $31_1$, $31_2$ will be $(d/2)\cdot\sin\theta$, an arrival-time difference of $(d/2)\cdot\sin\theta/c$ will arise and this difference will give rise to the phase delay ascribable to antenna placement.

If the center frequency of the multicarrier is $f_c$, the wavelength thereof is $\lambda_c$, Equation (3) is divided by Equation (1), Equation (4) is divided by Equation (2) and the relation $\lambda_c = c \cdot f_c$ is applied, the equations indicated below are obtained.

Specifically, from (3)/(1), we obtain the following:

$$\left(\frac{r_{f1}^{(2)}}{r_{f1}^{(1)}}\right) = \exp\left\{j2\pi\left(\frac{f_1}{f_c}\right)\left(\frac{d}{\lambda_c}\right)\sin\theta\right\} \cdot \left(\frac{a^{(2)}}{a^{(1)}}\right) \qquad \cdots \ (5)$$

and from (4)/(2), we obtain the following:

$$\left(\frac{r_{f4}^{(2)}}{r_{f4}^{(1)}}\right) = \exp\left\{j2\pi\left(\frac{f_4}{f_c}\right)\left(\frac{d}{\lambda_c}\right)\sin\theta\right\} \cdot \left(\frac{a^{(2)}}{a^{(1)}}\right) \qquad \cdots \ (6)$$

In Equations (5) and (6),

$\sin\theta$ and $(a^{(2)}/a^{(1)})$

are unknown but everything else is known. If we let the phase terms on the right side of Equations (5) and (6) be represented respectively by the following:

$$\Phi_{f1} \, , \, \Phi_{f4}$$

let the ratio $(a^{(2)}/a^{(1)})$ on the right side of Equations (5) and (6) be represented by

$$\left(a^{(2)}\big/a^{(1)}\right) = A_{21}e^{j\phi21}$$

and we compare the phase terms, then the equations set forth below are obtained. It should be noted that $\phi_{21}$ represents the difference (the phase variation) between the amounts of phase shift of the radio receiving circuits $32_1$, $32_2$, and that this is the amount of phase shift of the radio receiving circuit $32_2$ when the amount of phase shift of the radio receiving circuit $32_1$ is adopted as the reference.

$$\Phi_{f1} = 2\pi\left(\frac{f_1}{f_c}\right)\left(\frac{d}{\lambda_c}\right)\sin\theta + \phi_{21} \qquad \cdots \ (7)$$

$$\Phi_{f4} = 2\pi\left(\frac{f_4}{f_c}\right)\left(\frac{d}{\lambda_c}\right)\sin\theta + \phi_{21} \qquad \cdots \ (8)$$

Subtracting Equation (7) from Equation (8) gives us the following equation:

$$\Phi_{f4} - \Phi_{f1} = 2\pi \left( \frac{f_4 - f_1}{f_c} \right) \left( \frac{d}{\lambda_c} \right) \sin\theta \qquad \cdots \quad (9)$$

and the beam arrival direction $\theta$ is given by the following equation:

$$\theta = \sin^{-1} \left( \frac{\Phi_{f4} - \Phi_{f1}}{2\pi \left( \frac{f_4 - f_1}{f_c} \right) \left( \frac{d}{\lambda_c} \right)} \right) \qquad \cdots \quad (10)$$

Furthermore, if we eliminate $\sin\theta$ from Equations (7) and (8), we obtain the following equation:

$$\phi_{21} = \frac{f_4}{f_4 - f_1} \Phi_{f1} - \frac{f_1}{f_4 - f_1} \Phi_{f4} = \frac{f_4 \Phi_{f1} - f_1 \Phi_{f4}}{f_4 - f_1} \qquad \cdots \quad (11)$$

and the phase for calibration (for correcting for phase variation) can be obtained.

Fig. 3 is a diagram illustrating the relationship between frequency f of a receive signal and amount $\Phi$ of phase shift. Here $\Phi_{f1}$ is the difference between amounts of phase shift in the radio receiving circuits $32_1$, $32_2$ at frequency $f_1$, $\Phi_{f2}$ is the difference between amounts of phase shift in the radio receiving circuits $32_1$, $32_2$ at frequency $f_2$, and $\phi_{21}$ is the difference between amounts of phase shift in the radio receiving circuits $32_1$, $32_2$ at frequency $f_c$.

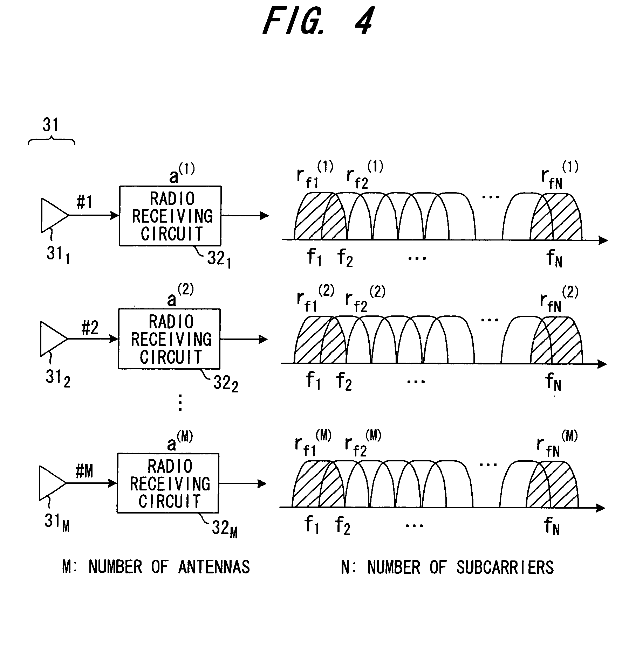

The foregoing is for a case where the number of carriers is four and the number of antennas is two. However, the invention is also applicable to a general case where the number of antennas is M and the number of carriers is N, as shown in Fig. 4. Specifically, in a manner similar to the case for two antennas with respect to antennas $31_1$, $31_2$, the beam arrival direction $\theta$ and the difference $\phi_{21}$ between the phase shifts are obtained using baseband signals $r_{f1}^{(1)}$, $r_{fN}^{(1)}$ and baseband signals $r_{f1}^{(2)}$, $r_{fN}^{(2)}$. Similarly, with regard to antennas $31_2$, $31_3$, a difference $\phi_{32}$ between phase shifts is obtained using baseband signals $r_{f1}^{(2)}$, $r_{fN}^{(2)}$ and baseband signals $r_{f1}^{(3)}$, $r_{fN}^{(3)}$. Similarly, with regard to antennas $31_{M-1}$, $31_M$, a difference $\phi_{M,M-1}$ between phase shifts is obtained using baseband signals $r_{f1}^{(M-1)}$, $r_{fN}^{(M-1)}$ and baseband signals $r_{f1}^{(M)}$, $r_{fN}^{(M)}$. Thus are obtained the beam arrival direction $\theta$ and the phase-shift amounts $\phi_{21}$ to $\phi_{M1}$ that prevail in the other radio receiving circuits $32_2$ to $32_M$ when the amount of phase shift of radio receiving circuit $32_1$ conforming to the first antenna $31_1$ is assumed to be zero. It should be noted that $\phi_{31} = \phi_{32} + \phi_{21}, \cdots, \phi_{M1} = \phi_{M,M-1} + \cdots + \phi_{32} + \phi_{21}$.

(B) First Embodiment

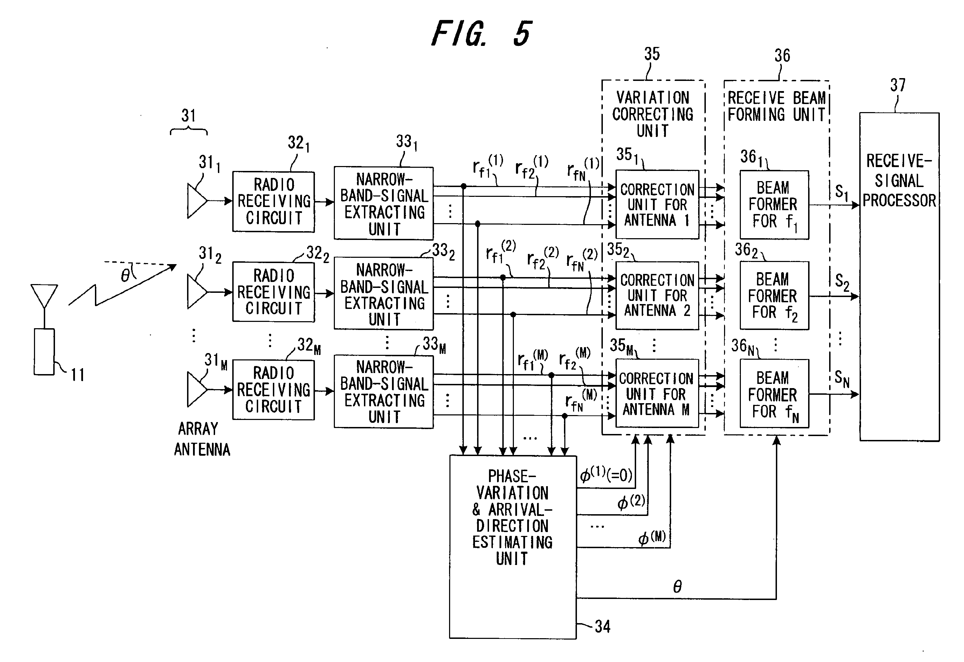

Fig. 5 is a diagram illustrating the structure of a radio receiving apparatus according to a first embodiment of the present invention. Components identical with those of Figs. 1 and 4 are designated by like reference characters.

The mobile station 11 wirelessly transmits a multicarrier signal of frequencies $f_1$ to $f_N$. The radio waves (beams) of this radio signal impinge upon the linear array antenna (where the number of antennas is M) 31 of the base station 21 at an angle $\theta$. Antennas $31_1$ to $31_M$ of the array antenna input the received signal to radio receiving circuits $32_1$ to $32_M$, respectively. The radio receiving circuits $32_1$ to $32_M$ amplify the respective radio signals, subject the radio signals to frequency down-conversion processing and AD conversion processing and output baseband signals of the combined N-number of carriers. Narrow-band-signal extracting units $33_1$ to $33_M$ respectively separate and output signal components $r_{f1}^{(1)}$ to $r_{fN}^{(1)}$; $r_{f1}^{(2)}$ to $r_{fN}^{(2)}$; $\cdots$; $r_{f1}^{(M)}$ to $r_{fN}^{(M)}$ of N-number of frequencies $f_1$ to $f_N$ from the baseband signals that enter from the radio receiving circuits $32_1$ to $32_M$. In case of OFDM communication in which data is transmitted on a multiplicity of subcarriers (e.g., 256 subcarriers), the narrow-band-signal extracting units $33_1$ to $33_M$ generate the subcarrier components by FFT processing.

A phase-variation & arrival-direction estimating unit 34 obtains the beam arrival direction $\theta$ and phase-shift difference $\phi^{(2)}$ in accordance with Equations (10) and (11) using baseband signals $r_{f1}^{(1)}$, $r_{fN}^{(1)}$ and baseband signals $r_{f1}^{(2)}$ $r_{fN}^{(2)}$ of frequencies $f_1$, $f_N$ of antennas $31_1$, $31_2$, respectively. Further, the phase-variation & arrival-direction estimating unit 34 obtains a phase-shift difference $\phi^{(3)}$ in accordance with Equation (11) using baseband signals $r_{f1}^{(2)}$, $r_{fN}^{(2)}$ and baseband signals $r_{f1}^{(3)}$, $r_{fN}^{(3)}$ of frequencies $f_1$, $f_N$ of antennas $31_2$, $31_3$, respectively. Similarly, the phase-variation & arrival-direction estimating unit 34 obtains a phase-shift difference $\phi^{(M)}$ in accordance with Equation (11) using baseband signals $r_{f1}{}^{(M-1)}$, $r_{fN}{}^{(M-1)}$ and baseband signals $r_{f1}{}^{(M)}$, $r_{fN}{}^{(M)}$ of frequencies $f_1$, $f_N$ of antennas $31_{M-1}$, $31_M$, respectively. Thus are obtained the beam arrival direction $\theta$ and the phase-shift amounts $\phi^{(2)}$ to $\phi^{(M)}$ that prevail in the other radio receiving circuits $32_2$ to $32_M$ when the amount $\phi^{(1)}$ of phase shift of radio receiving circuit $32_1$ of the first antenna $31_1$ is assumed to be zero.

The variation correcting unit 35 has correction units $35_1$ to $35_M$ for imparting phase characteristics $-\phi^{(1)}$ to $-\phi^{(M)}$, the signs whereof are opposite those of the phase-shift amounts $\phi^{(1)}$ to $\phi^{(M)}$ in the radio receiving circuits $32_1$ to $32_M$, respectively, to respective ones of the input signals, thereby nulling the total phase-shift amounts. That is, the correction unit $35_1$ imparts a phase characteristic $-\phi^{(1)} = 0$ to the signal components $r_{f1}{}^{(1)}$ to $r_{fN}{}^{(1)}$ of the N-number of frequencies $f_1$ to $f_N$, thereby canceling the phase-shift amount $\phi^{(1)}$ in the radio receiving circuit $32_1$. Further, the correction unit $35_2$ imparts a phase characteristic $-\phi^{(2)}$ to the signal components $r_{f1}{}^{(2)}$ to $r_{fN}{}^{(2)}$ of the N-number of frequencies $f_1$ to $f_N$, thereby canceling the phase-shift amount $\phi^{(2)}$ in the radio receiving circuit $32_2$. Similarly, the correction unit $35_M$ imparts a phase characteristic $-\phi^{(M)}$ to the signal components $r_{f1}{}^{(M)}$ to $r_{fN}{}^{(M)}$ of the N-number of frequencies $f_1$ to $f_N$, thereby canceling the phase-shift amount $\phi^{(M)}$ in the radio receiving circuit $32_M$.

A receive beam forming unit 36 has a beam former $36_1$ for frequency $f_1$ that subjects M-number of signal components of frequency $f_1$, which are output from the correction units $35_1$ to $35_M$, to prescribed weighting using the arrival direction $\theta$, and combines the signal components thus weighted. As a result, the beam former $36_1$ forms a signal component $S_1$ of frequency $f_1$ so as to have a peak in the direction of mobile station 11. Further, the receive beam forming unit 36 has a beam former $36_2$ for frequency $f_2$ that subjects M-number of signal components of frequency $f_2$, which are output from the correction units $35_1$ to $35_M$, to prescribed weighting using the arrival direction $\theta$, and combines the signal components thus weighted, thereby forming a signal component $S_2$ of frequency $f_2$ so as to have a peak in the direction of mobile station 11. Similarly, a beam former $36_N$ for frequency $f_N$ subjects M-number of signal components of frequency $f_N$, which are output from the correction units $35_1$ to $35_M$, to prescribed weighting using the arrival direction $\theta$, and combines the signal components thus weighted, thereby forming a signal component $S_N$ of frequency $f_N$ so as to have a peak in the direction of mobile station 11.

A receive-signal processor 37 subjects the carrier signals $S_1$ to $S_N$ of frequencies $f_1$ to $f_N$, respectively, to error detection and correction and to demodulation processing and outputs the result.

The reason for estimating the beam arrival direction $\theta$ and the phase-shift amounts $\phi^{(2)}$ to $\phi^{(M)}$ using the baseband signals of frequencies $f_1$, $f_N$ in the phase-variation & arrival-direction estimating unit 34 is that estimation can be performed more precisely by using carriers whose frequencies are as far apart from each other as possible. That is, in order to obtain the phase-shift amount $\Phi$ that is proportional to frequency, as shown in Fig. 3, estimation is less susceptible to error if the frequencies are far apart rather than close together.

Thus, in accordance with the first embodiment, correction (calibration) for variation and estimation of arrival direction can be performed through a simple arrangement without additionally providing a reference-signal insertion circuit, a radio receiving circuit for calibration or a beacon station, etc., as required in the prior art.

(C) Second Embodiment

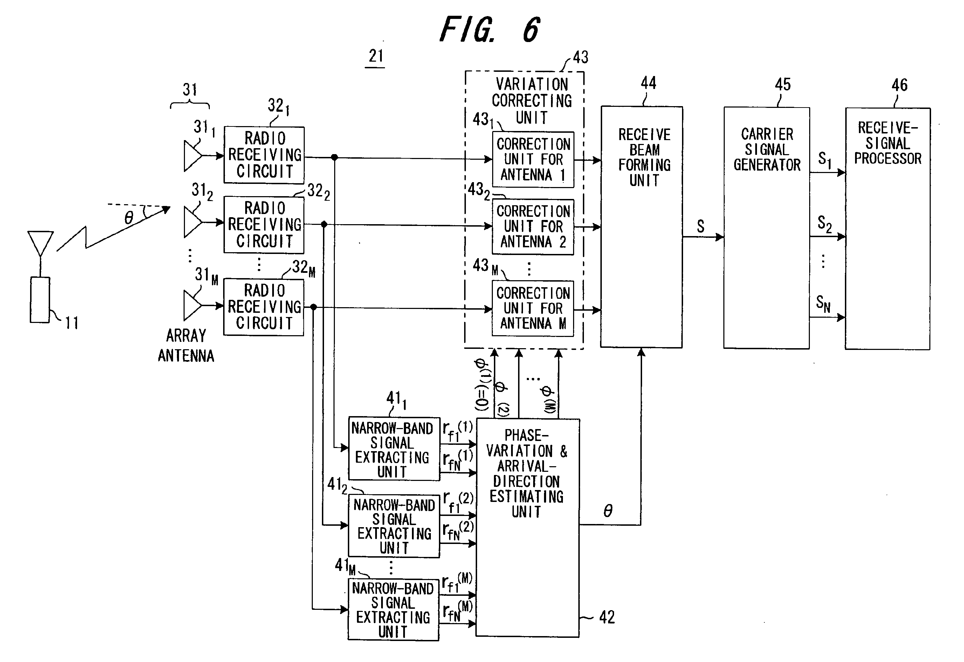

Fig. 6 is a diagram illustrating the structure of a radio receiving apparatus according to a second embodiment of the present invention. Components identical with those of Figs. 1 and 4 are designated by like reference characters.

The mobile station 11 wirelessly transmits a multicarrier signal of frequencies $f_1$ to $f_N$. The radio waves (beams) of this radio signal impinge upon the linear array antenna (where the number of antennas is M) 31 of the base station 21 at an angle $\theta$. The antennas $31_1$ to $31_M$ of the array antenna input the received signals to the radio receiving circuits $32_1$ to $32_M$, respectively. The radio receiving circuits $32_1$ to $32_M$ amplify the radio signals, subject the radio signals to frequency down-conversion processing and AD conversion processing and output baseband signals of the combined N-number of carriers. Narrow-band-signal extracting units $41_1$ to $41_M$ respectively separate and output the signal components $r_{f1}{}^{(1)}$, $r_{fN}{}^{(1)}$; $r_{f1}{}^{(2)}$, $r_{fN}{}^{(2)}$; $\cdots$; $r_{f1}{}^{(M)}$, $r_{fN}{}^{(M)}$ of two frequencies $f_1$ and $f_N$ from the baseband signals that enter from the radio receiving circuits $32_1$ to $32_M$.

A phase-variation & arrival-direction estimating unit 42 obtains the beam arrival direction $\theta$ and difference $\phi^{(2)}$ between the amounts of phase shift in accordance with Equations (10) and (11) using the baseband signals $r_{f1}{}^{(1)}$, $r_{fN}{}^{(1)}$ and the baseband signals $r_{f1}{}^{(2)}$, $r_{fN}{}^{(2)}$ of frequencies $f_1$ and $f_N$ of antennas $31_1$, $31_2$, respectively. Further, the phase-variation & arrival-direction estimating unit 42 obtains the difference $\phi^{(3)}$ between the amounts of phase shift in accordance with Equation (11) using the baseband signals $r_{f1}{}^{(2)}$, $r_{fN}{}^{(2)}$ and the baseband signals $r_{f1}{}^{(3)}$, $r_{fN}{}^{(3)}$ of frequencies $f_1$ and $f_N$ of antennas $31_2$, $31_3$, respectively. Similarly, the phase-variation & arrival-direction estimating unit 42 obtains the difference $\phi^{(M)}$ between the amounts of phase shift in accordance with Equation (11) using baseband signals $r_{f1}{}^{(M-1)}$, $r_{fN}{}^{(M-1)}$ and baseband signals $r_{f1}{}^{(M)}$, $r_{fN}{}^{(M)}$ of frequencies $f_1$ and $f_N$ of antennas $31_{M-1}$, $31_M$, respectively. Thus are obtained the beam arrival direction $\theta$ and phase-shift amounts $\phi^{(2)}$ to $\phi^{(M)}$ that prevail in the other radio receiving circuits $32_2$ to $32_M$ when the amount $\phi^{(1)}$ of phase shift of radio receiving circuit $32_1$ of the first antenna $31_1$ is assumed to be zero.

A variation correcting unit 43 has correction units $43_1$ to $43_M$ for imparting phase characteristics $-\phi^{(1)}$ to $-\phi^{(M)}$, the signs whereof are opposite those of the phase-shift amounts $\phi^{(1)}$ to $\phi^{(M)}$ in the radio receiving circuits $32_1$ to $32_M$, to respective ones of the input signals, thereby nulling the total phase-shift amounts. That is, the correction unit $43_1$ imparts a phase characteristic $-\phi^{(1)} = 0$ to the baseband signal that is output from the radio receiving circuit $32_1$, thereby canceling the phase-shift amount $\phi^{(1)}$ in the radio receiving circuit $32_1$. Further, a correction unit $43_2$ imparts a phase characteristic $-\phi^{(2)}$ to the baseband signal that is output from the radio receiving circuit $32_2$, thereby canceling the phase-shift amount $\phi^{(2)}$ in the radio receiving circuit $32_2$. Similarly, a correction unit $43_M$ imparts a phase characteristic $-\phi^{(M)}$ to the baseband signal that is output from the radio receiving circuit $32_M$, thereby canceling the phase-shift amount $\phi^{(M)}$ in the radio receiving circuit $32_M$.

A receive beam forming unit 44 subjects M-number of baseband signals that are output from each of the correction units $43_1$ to $43_M$ to prescribed weighting using the arrival direction $\theta$ and combines each of the signal components thus weighted. As a result, the receive beam forming unit 44 forms a baseband signal S so as to have a peak in the direction of the mobile station 11. A carrier signal generator 45 separates carrier signal components $S_1$ to $S_N$ of frequencies $f_1$ to $f_N$ from the baseband signal S and outputs these carrier signal components. In case of OFDM transmission, the carrier signal generator 45 is constituted by an FFT processor, and the subcarrier components can be generated by FFT processing.

A receive-signal processor 46 subjects the carrier signals $S_1$ to $S_N$ of frequencies $f_1$ to $f_N$ to error detection and correction and to demodulation processing and outputs the result.

Thus, in accordance with the second embodiment, correction (calibration) for variation and estimation of arrival direction can be performed through a simple arrangement without additionally providing a reference-signal insertion circuit, a radio receiving circuit for calibration or a beacon station, etc., as required in the prior art. Further, the arrangement can be simplified because it is unnecessary to provide a receive beam former for every carrier.

(D) Technique for improving estimation precision

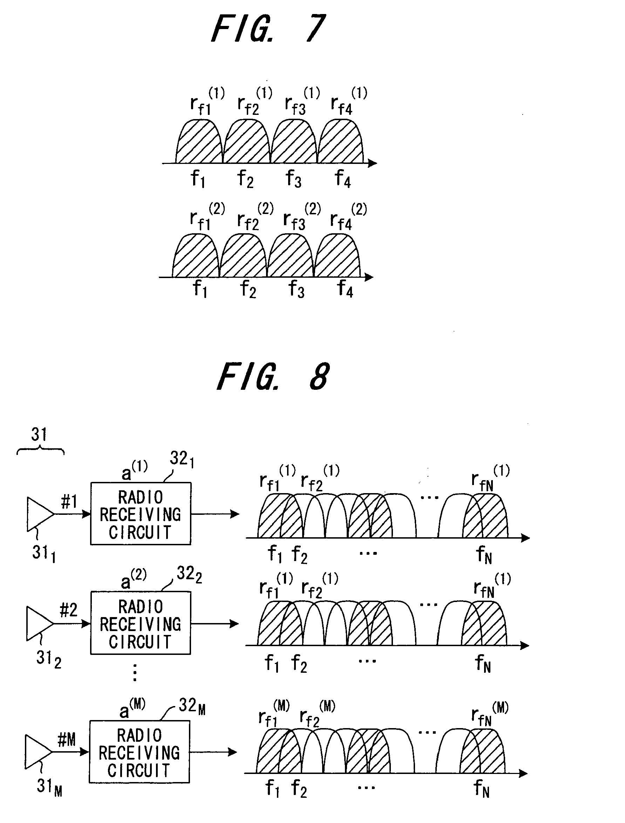

In the first and second embodiments, the beam arrival direction $\theta$ and the phase-shift amounts $\phi_{21}$ to $\phi_{M1}$ are estimated using the baseband signals of frequencies $f_1$ and $f_N$. However, the accuracy of estimation can be improved by estimating and averaging the beam arrival direction $\theta$ and phase-shift amounts $\phi^{(2)}$ to $\phi^{(M)}$ using the baseband signals of other frequencies $f_i$, $f_j$. Fig. 7 is a diagram useful in describing a method of improving estimation accuracy in a system of four carriers and two antennas. Combinations of frequencies used in order to estimate the beam arrival direction $\theta$ and phase-shift amount $\phi^{(2)}$ are six in number, namely (1) $f_1$, $f_2$, (2) $f_1$, $f_3$, (3) $f_1$, $f_4$, (5) $f_2$, $f_4$ and (6) $f_3$, $f_4$. Accordingly, the accuracy of estimation can be improved by estimating and averaging the beam arrival direction $\theta$ and phase-shift amount $\phi^{(2)}$ with regard to several combinations. Fig. 8 is a diagram useful in describing a method of improving estimation accuracy in a system of N carriers and M antennas. Here the accuracy of estimation can be improved by estimating and averaging the beam arrival direction $\theta$ and phase-shift amounts $\phi^{(2)}$ to $\phi^{(M)}$ with regard to a plurality of combinations in a manner similar to the case of four carriers and two antennas.

Conceivable methods of averaging are as follows:

(a) a method of finding the simple mean of each carrier;
(b) a method of applying weighting conforming to the reliability (reception level) of each carrier and calculating the average;
(c) a method of applying large weighting to frequencies that are far apart, by reason of the fact that such frequencies are less susceptible to noise, and averaging the results; and
(d) a method that combines a plurality of the methods mentioned above.

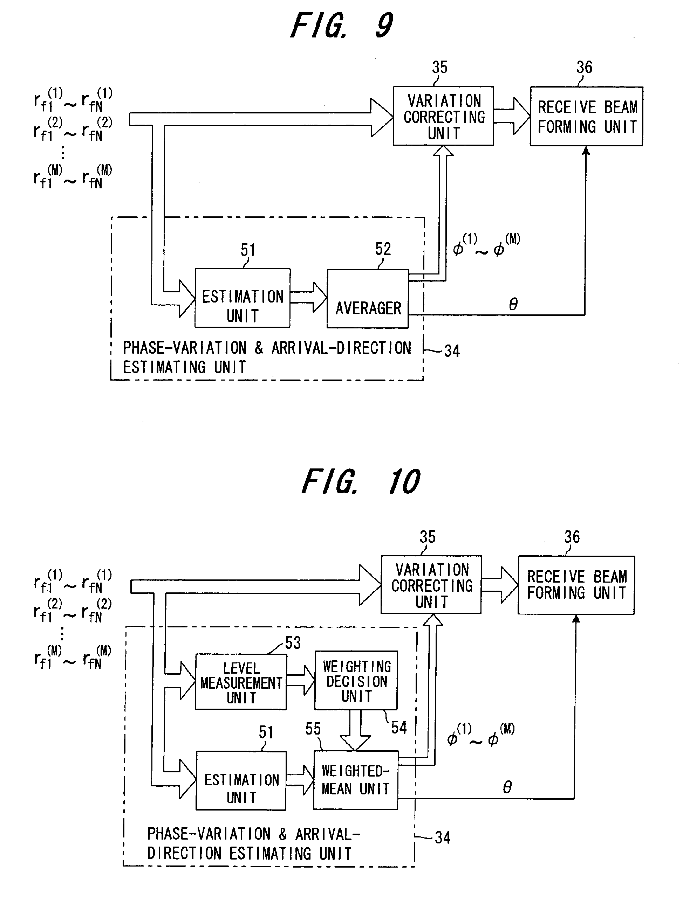

Fig. 9 is a block diagram illustrating an embodiment of the phase-variation & arrival-direction estimating unit 34 in a method of finding a simple mean. Components identical with those of Fig. 5 are designated by like reference characters. The phase-variation & arrival-direction estimating unit 34 is constituted by an estimation unit 51 for estimating the beam arrival direction $\theta$ and the phase-shift amounts $\phi^{(2)}$ to $\phi^{(M)}$ with regard to each combination of frequencies, and an averager 52 for obtaining the simple mean with regard to a plurality of beam arrival directions $\theta$ and each of the phase-shift amounts $\phi^{(2)}$ to $\phi^{(M)}$ that have been obtained with regard to each combination of frequencies. Finding the simple mean is a method of dividing the sum total of all samples by the number of samples and adopting the resulting value as the average value.

Fig. 10 is a block diagram illustrating an embodiment of the phase-variation & arrival-direction estimating unit 34, which calculates an average upon applying weighting that conforms to reception level. Components identical with those of Fig. 5 are designated by like reference characters. The phase-variation & arrival-direction estimating unit 34 is constituted by the estimation unit 51 for estimating the beam arrival direction $\theta$ and the phase-shift amounts $\phi^{(2)}$ to $\phi^{(M)}$ with regard to each combination of frequencies; a level measurement unit 53 for measuring the levels of the carrier signal components $r_{f1}^{(1)}$ to $r_{fN}^{(1)}$; $r_{f1}^{(2)}$ to $r_{fN}^{(2)}$; $\cdots$; $r_{f1}^{(M)}$ to $r_{fN}^{(M)}$ of respective ones of the antennas; a weighting decision unit 54 for deciding weighting coefficients based upon levels of the carrier signal components with regard to each combination; and a weighted-mean unit 55 for multiplying the beam arrival direction $\theta$ and each of the phase-shift amounts $\phi^{(2)}$ to $\phi^{(M)}$, which have been obtained with regard to each combination, by the weighting coefficients, and calculating the averages. By way of example, the weighted-mean unit 55 obtains the phase-shift amount of each antenna by performing weighting and averaging in such a manner that maximum-ratio combining is performed between carriers based upon the level of each carrier signal of each antenna obtained by the level measurement unit 53.

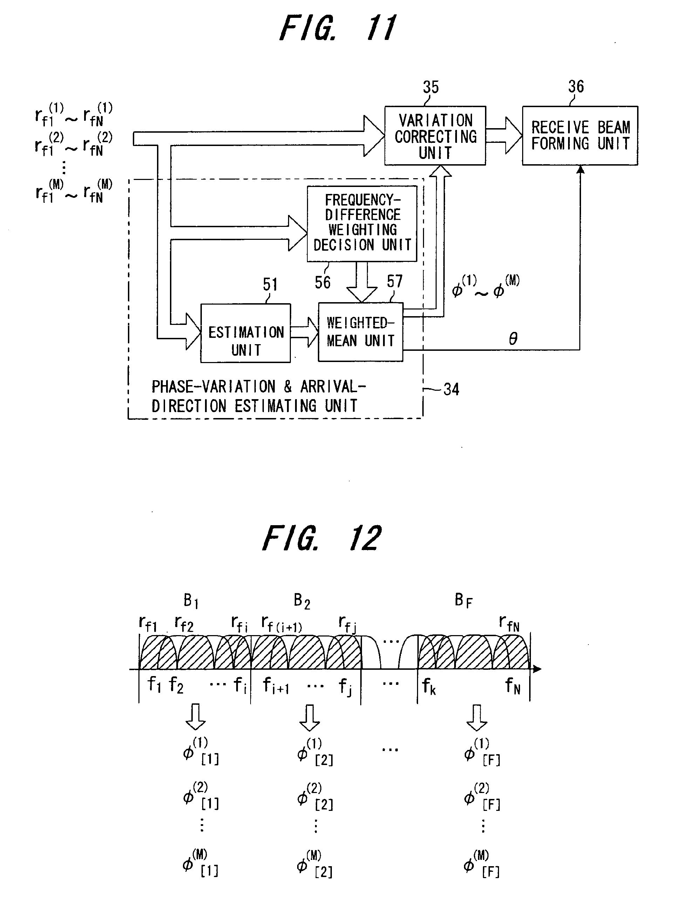

Fig. 11 is a block diagram illustrating an embodiment of the phase-variation & arrival-direction estimating unit 34, which calculates an average upon applying weighting that conforms to the frequency spacing of a combination. Components identical with those of Fig. 5 are designated by like reference characters. The phase-variation & arrival-direction estimating unit 34 is constituted by the estimation unit 51 for estimating the beam arrival direction $\theta$ and the phase-shift amounts $\phi^{(2)}$ to $\phi^{(M)}$ with regard to each combination of frequencies; a frequency-difference weighting decision unit 56 for deciding weighting coefficients that conform to frequency spacing with regard to each combination of frequencies; and a weighted-mean unit 57 for multiplying the beam arrival direction $\theta$ and each of the phase-shift amounts $\phi^{(2)}$ to $\phi^{(M)}$, which have been obtained with regard to each combination of frequencies, by the weighting coefficients, and calculating the averages.

(E) Third Embodiment

The foregoing embodiments relate to a case where a correction is applied upon estimating one of the phase-shift amounts $\phi^{(1)}$ to $\phi^{(M)}$ per each of the radio receiving circuits $32_1$ to $32_M$. However, there are instances where in wide-band transmission such as OFDM transmission, the radio receiving circuits $32_1$ to $32_M$ have frequency characteristics and the phase-shift amounts $\phi$ fluctuate from one frequency band to another. In such cases it is necessary to obtain and correct the amount of phase shift on a per-frequency-band basis. Fig. 12 is a diagram useful in describing the principles of a third embodiment of the present invention. Here OFDM subcarriers $f_1$ to $f_N$ are partitioned into F-number of bands $B_1$ to $B_F$. In the case of OFDM, the number N of subcarriers is 128, 256, 512, etc.

The phase-variation & arrival-direction estimating unit 34 obtains phase-shift amounts $\phi^{(1)}[1]$ to $\phi^{(M)}[1]$; $\phi^{(1)}[2]$ to $\phi^{(M)}[2]$; $\cdots$; $\phi^{(1)}[F]$ to $\phi^{(M)}[F]$ in respective ones of the bands $B_1$ to $B_F$ using both end frequencies $f_1$, $f_i$; $f_{i+1}$, $f_j$; $\cdots$; $f_k$, $f_N$ of respective ones of the bands $B_1$ to $B_F$, and corrects for the phase-shift amount on a per-frequency-band basis.

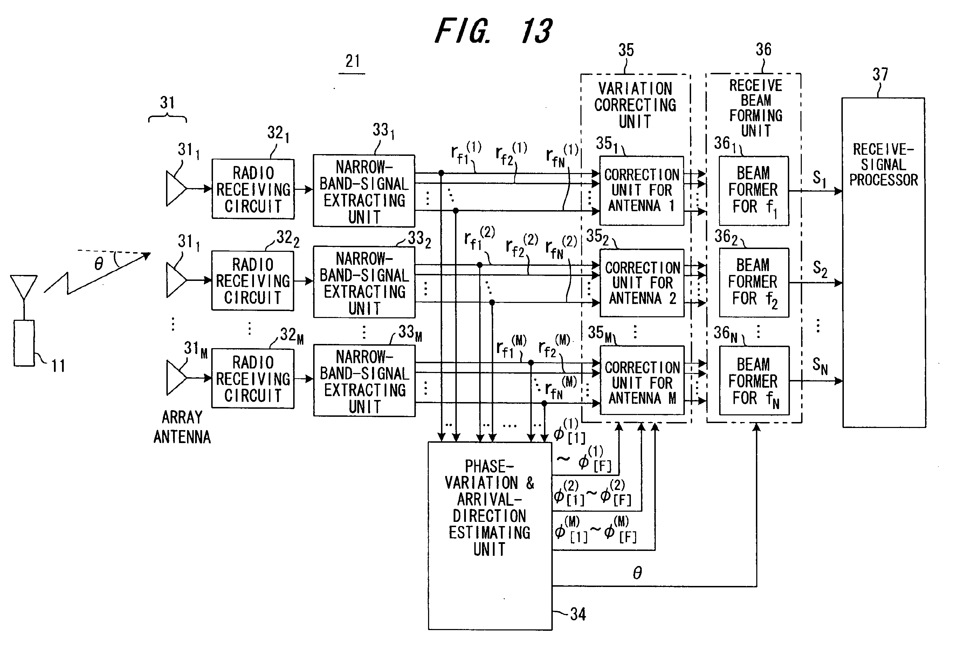

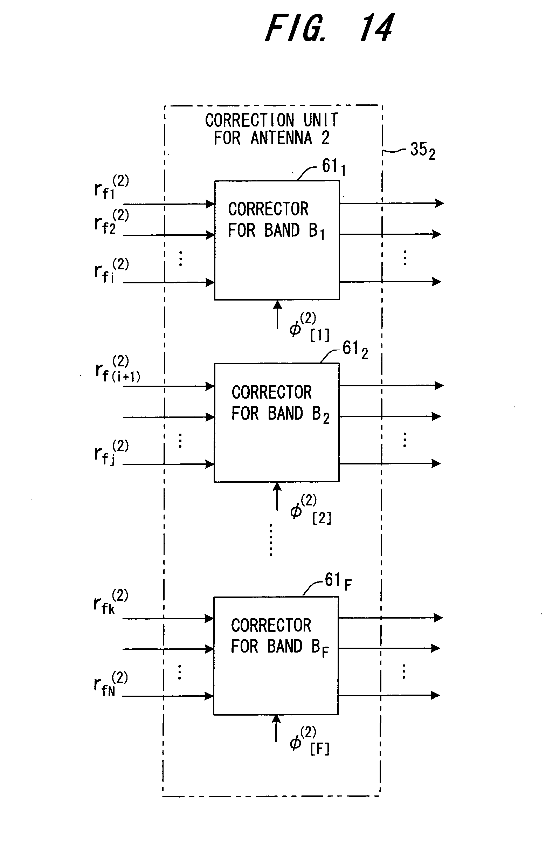

Fig. 13 is a diagram illustrating the structure of a radio receiving apparatus according to the third embodiment. Components identical with those of Fig. 5 are designated by like reference characters. The apparatus according to this embodiment differs in that (1) the phase-variation & arrival-direction estimating unit 34 obtains the phase-shift amounts $\phi^{(1)}[1]$ to $\phi^{(M)}[1]$; $\phi^{(1)}[2]$ to $\phi^{(M)}[2]$; ...; $\phi^{(1)}[F]$ to $\phi^{(M)}[F]$ in respective ones of the bands $B_1$ to $B_F$ with regard to respective ones of the radio receiving circuits $32_1$ to $32_M$, and inputs these phase-shift amounts to the variation correcting unit 35, and (2) the correction units $35_1$ to $35_M$ corresponding to the radio receiving circuits $32_1$ to $32_M$ correct for the phase-shift amounts for each of the bands $B_1$ to $B_F$ obtained by partitioning. Fig. 14 illustrates an example of the structure of the correction unit $35_2$ corresponding to one radio receiving circuit $32_2$. The correction unit $35_2$ has correctors $61_1$ to $61_F$ for bands $B_1$ to $B_F$, respectively. The corrector $61_1$ for band $B_1$ imparts a phase characteristic $-\phi^{(2)}[1]$ to the signal components $r_{f1}^{(2)}$ to $r_{fi}^{(2)}$ of the frequencies $f_1$ to $f_i$, thereby canceling the phase-shift amount $\phi^{(2)}[1]$ of band B1 in the radio receiving circuit $32_2$. The corrector $61_2$ for band $B_2$ imparts a phase characteristic $-\phi^{(2)}[2]$ to the signal components $r_{fi+1}^{(2)}$ to $r_{fj}^{(2)}$ of the frequencies $f_{i+1}$ to $f_j$, thereby canceling the phase-shift amount $\phi^{(2)}[2]$ of band $B_2$ in the radio receiving circuit $32_2$. Similarly, the corrector $61_F$ for band $B_F$ imparts a phase characteristic $-\phi^{(2)}[F]$ to the signal components $r_{fk}^{(2)}$ to $r_{fN}^{(2)}$ of the frequencies $f_k$ to $f_N$, thereby canceling the phase-shift amount $\phi^{(2)}[F]$ of band $B_F$ in the radio receiving circuit $32_2$.

(F) Fourth Embodiment

The embodiment described above relates to a case where the present invention is applied to a multicarrier communication scheme (inclusive of OFDM). However, the invention is applicable not only to a multicarrier scheme but also to a single-carrier scheme.

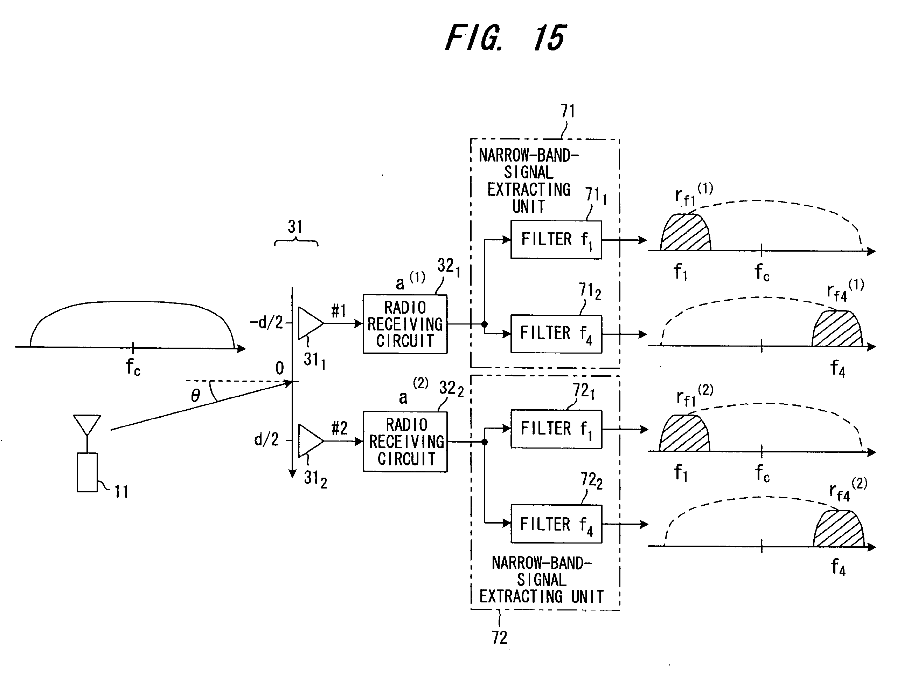

Fig. 15 is a diagram useful in describing principles in a case where the present invention is applied to a wide-band single-carrier signal. Components identical with those of Fig. 1 are designated by like reference characters. This embodiment differs in that the mobile station 11 transmits a wide-band single-carrier signal of center frequency $f_c$; two filters $71_1$, $71_2$ that construct a narrow-band-signal extracting unit 71 extract and output signal components $r_{f1}^{(1)}$, $r_{f4}^{(1)}$ of frequencies $f_1$, $f_4$, respectively, from the output signal of the radio receiving circuit $32_1$; and two filters $72_1$, $72_2$ that construct a narrow-band signal extracting unit 72 extract and output signal components $r_{f1}^{(2)}$, $r_{f4}^{(2)}$ of frequencies $f_1$, $f_4$, respectively, from the output signal of the radio receiving circuit $32_2$. If the signal components $r_{f1}^{(1)}$, $r_{f4}^{(1)}$ and $r_{f1}^{(2)}$, $r_{f4}^{(2)}$ of frequencies $f_1$, $f_4$ are extracted, variation can be corrected for and beam forming can be carried out by using these signals to estimate the beam arrival direction $\theta$ and phase-shift amount $\phi^{21}$ according to Equations (10) and (11) in a manner similar to that of the first embodiment.

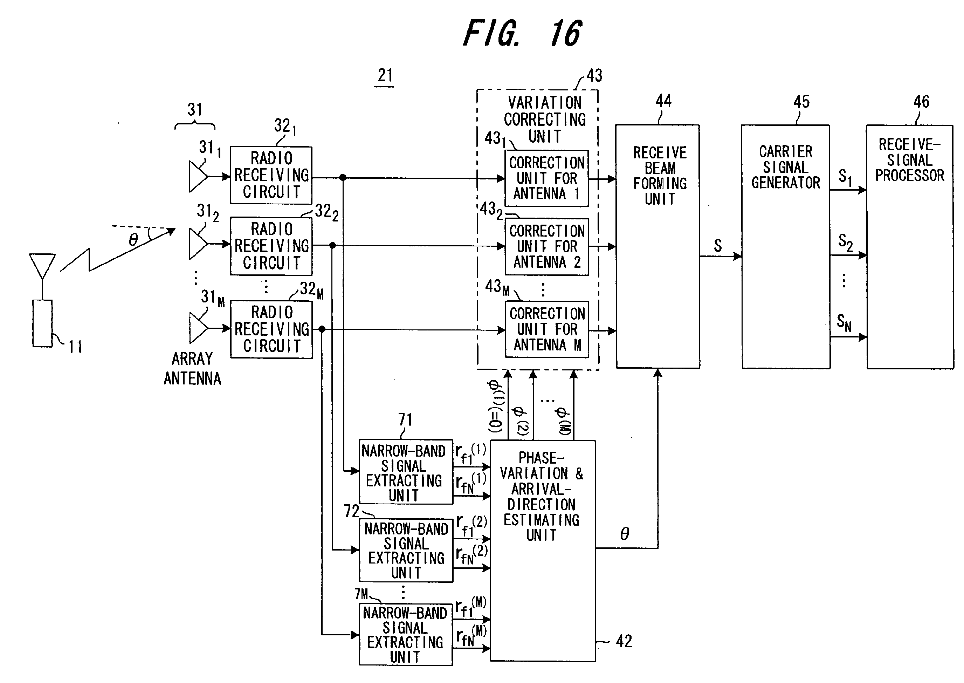

Fig. 16 illustrates an embodiment of a case where the present invention is applied to single-carrier signal. Components identical with those of Figs. 1 and 4 are designated by like reference characters. This embodiment differs in that (1) narrow-band-signal extracting units 71 to 7M are each constituted by two filters (see Fig. 15) that extract and output signal components $r_{f1}^{(1)}$, $r_{fN}^{(1)}$ to $r_{f1}^{(M)}$, $r_{fN}^{(M)}$ of frequencies $f_1$, $f_N$ from the output signals of the radio receiving circuits $32_1$ to $32_M$; and (2) and the phase-variation & arrival-direction estimating unit 42 estimates the beam arrival direction $\theta$ and phase-shift amounts $\phi^{(1)}$ to $\phi^{(M)}$ using these signal components.

Thus, the present invention provides a multicarrier communication scheme (inclusive of OFDM), which is viewed as promising in future wireless communications, with a wireless communication apparatus whereby a variation that occurs in the radio receiving circuit of each of a number of antennas can be corrected for and arrival direction estimated through a simple arrangement without adding on a reference-signal insertion circuit or a radio receiving circuit. Further, the fact that the apparatus is simplified in structure is advantageous in that cost can be reduced, reliability enhanced and maintenance management simplified.

As many apparently widely different embodiments of the present invention can be made without departing from the spirit and scope thereof, it is to be understood that the invention is not limited to the specific embodiments thereof except as defined in the appended claims.

**Claims**

1. A wireless communication apparatus having an array antenna constituted by a plurality of antennas, radio receiving circuits, which are provided for respective ones of the antennas, for amplifying respective ones of antenna receive signals and frequency converting the antenna receiving signals to baseband signals, and a demodulator for demodulating receive data from the baseband signals, said apparatus comprising:

   a narrow-band-signal extracting unit for extracting narrow-band signals from the baseband signals of each antenna;
   an estimating unit for estimating phase variation in each radio receiving circuit using the narrow-band signals of each antenna;
   a correcting unit for correcting for phase variation in each radio receiving circuit and outputting a corrected signal; and
   a receive-signal processor for demodulating receive data from the corrected signal.

2. The apparatus according to claim 1, wherein if the array antenna is a linear array antenna, distance between adjacent antennas is d and angle of incidence of a signal upon the linear array antenna is $\theta$, then said estimating unit estimates phase variation in each radio receiving circuit taking into consideration the fact that a time difference between signal arrivals at mutually adjacent antennas is represented by $d \cdot \sin\theta/c$ (where c stands for the velocity of light).

3. The apparatus according to claim 1, further comprising:

   an estimating unit for estimating direction of signal arrival using narrow-band signals of at least two antennas; and
   a beam former for applying receive beam-forming processing to each corrected signal based upon the direction of signal arrival;

   wherein said receive-signal processor demodulates receive data from the receive signal that has undergone beam-forming processing.

4. The apparatus according to claim 1 or 3, wherein the narrow-band signal of each antenna is each subcarrier of a multicarrier communication system or each subcarrier of an OFDM (Orthogonal Frequency Division Multiplex) communication system.

5. The apparatus according to claim 1 or 3, wherein the narrow-band signal of each antenna is one of a plurality of narrow-band signals extracted using filters in wide-band single-carrier transmission.

6. The apparatus according to claim 1 or 3, wherein said estimating unit uses narrow-band signals of two carriers of maximum frequency spacing as the plurality of narrow-band signals of each antenna.

7. The apparatus according to claim 1 or 2, wherein said estimating unit obtains phase variations with regard to a plurality of sets of carriers and concludes that a simple weighted mean of these phase variations is the true phase variation.

8. The apparatus according to claim 1, wherein said estimating unit obtains phase variations with regard to a plurality of sets of carriers, weights the phase variation of each set based upon the reception signal levels of the carriers and concludes that the weighted mean value is the true phase variation.

9. The apparatus according to claim 1, wherein said estimating unit obtains phase variations with regard to a plurality of sets of carriers, weights the phase variation of each set based upon frequency spacing of the carriers and concludes that the weighted mean value is the true phase variation.

10. The apparatus according to claim 1, wherein in a case where the radio receiving circuits have frequency characteristics in wide-band transmission, said estimating unit partitions subcarriers into a plurality of frequency regions the frequency characteristics whereof are regarded as being substantially uniform, and corrects for phase variation of the radio receiving circuits for every region into which the subcarriers have been partitioned.

11. In a wireless communication apparatus having an array antenna constituted by a plurality of antennas, radio receiving circuits, which are provided for respective ones of the antennas, for amplifying respective ones of antenna receive signals and frequency converting the antenna receiving signals to baseband signals, and a demodulator for demodulating receive data from the baseband signals, a method of correcting for phase variation in the radio receiving circuits comprising the steps of:

   extracting narrow-band signals from the baseband signals of each antenna;
   estimating phase variation in each radio receiving circuit using the narrow-band signals of each antenna; and
   correcting for phase variation in each radio receiving circuit by subjecting an output signal of each radio receiving circuit to a phase correction having a phase opposite that of the phase variation.

12. The method according to claim 11, wherein if the array antenna is a linear array antenna, distance between adjacent antennas is d and angle of incidence of a signal upon the linear array antenna is $\theta$, then said estimating step estimates phase variation in each radio receiving circuit taking into consideration the fact that a time difference between signal arrivals at mutually adjacent antennas is represented by $d \cdot \sin\theta/c$ (where c stands for the velocity of light).

13. The method according to claim 11, further comprising the steps of:

   estimating direction of signal arrival using narrow-band signals of at least two antennas;
   applying receive beam-forming processing to each corrected signal based upon the direction of signal arrival; and
   demodulating receive data from the receive signal that has undergone beam-forming processing.

14. The method according to claim 11 or 13, wherein the narrow-band signal of each antenna is each subcarrier of a multicarrier communication system or each subcarrier of an OFDM (Orthogonal Frequency Division Multiplex) communication system.

15. The method according to claim 11 or 13, wherein the narrow-band signal of each antenna is one of a plurality of narrow-band signals extracted using filters in wide-band single-carrier transmission.

16. The method according to claim 11 or 13, wherein said estimating step uses narrow-band signals of two carriers of maximum frequency spacing as the plurality of narrow-band signals of each antenna.

17. The method according to claim 11 or 12, wherein said estimating step obtains phase variations with regard to a plurality of sets of carriers and concludes that a simple weighted mean of these phase variations is the true phase variation.

18. The method according to claim 11, wherein said estimating step obtains phase variations with regard to a plurality of sets of carriers, weights the phase variation of each set based upon the reception signal levels of the carriers and concludes that the weighted mean value is the true phase variation.

**19.** The method according to claim 11, wherein said estimating step obtains phase variations with regard to a plurality of sets of carriers, weights the phase variation of each set based upon frequency spacing of the carriers and concludes that the weighted mean value is the true phase variation.

**20.** The method according to claim 11, wherein in a case where the radio receiving circuits have frequency characteristics in wide-band transmission, said estimating step includes steps of:

partitioning subcarriers into a plurality of frequency regions the frequency characteristics whereof are regarded as being substantially uniform; and
correcting for phase variation of the radio receiving circuits for every region into which the subcarriers have been partitioned.

## FIG. 1

## FIG. 2

## FIG. 3

# FIG. 4

31

a^{(1)}

#1 → [RADIO RECEIVING CIRCUIT]
31_1                    32_1

$r_{f1}^{(1)}$  $r_{f2}^{(1)}$        $r_{fN}^{(1)}$
$f_1$  $f_2$   $\cdots$        $f_N$

a^{(2)}

#2 → [RADIO RECEIVING CIRCUIT]
31_2                    32_2

$r_{f1}^{(2)}$  $r_{f2}^{(2)}$        $r_{fN}^{(2)}$
$f_1$  $f_2$   $\cdots$        $f_N$

a^{(M)}

#M → [RADIO RECEIVING CIRCUIT]
31_M                    32_M

$r_{f1}^{(M)}$  $r_{f2}^{(M)}$        $r_{fN}^{(M)}$
$f_1$  $f_2$   $\cdots$        $f_N$

M: NUMBER OF ANTENNAS          N: NUMBER OF SUBCARRIERS

# FIG. 5

ARRAY ANTENNA

EP 1 744 469 A2

# FIG. 6

EP 1 744 469 A2

# FIG. 7

$r_{f1}^{(1)}$  $r_{f2}^{(1)}$  $r_{f3}^{(1)}$  $r_{f4}^{(1)}$

$f_1$  $f_2$  $f_3$  $f_4$

$r_{f1}^{(2)}$  $r_{f2}^{(2)}$  $r_{f3}^{(2)}$  $r_{f4}^{(2)}$

$f_1$  $f_2$  $f_3$  $f_4$

# FIG. 8

31

$a^{(1)}$  $32_1$

#1 → RADIO RECEIVING CIRCUIT →

$31_1$

$r_{f1}^{(1)}$  $r_{f2}^{(1)}$  $r_{fN}^{(1)}$

$f_1$  $f_2$  $f_N$

$a^{(2)}$  $32_2$

#2 → RADIO RECEIVING CIRCUIT →

$31_2$

$r_{f1}^{(1)}$  $r_{f2}^{(1)}$  $r_{fN}^{(1)}$

$f_1$  $f_2$  $f_N$

$a^{(M)}$  $32_M$

#M → RADIO RECEIVING CIRCUIT →

$31_M$

$r_{f1}^{(M)}$  $r_{f2}^{(M)}$  $r_{fN}^{(M)}$

$f_1$  $f_2$  $f_N$

## FIG. 9

$r_{f1}^{(1)} \sim r_{fN}^{(1)}$

$r_{f1}^{(2)} \sim r_{fN}^{(2)}$

$r_{f1}^{(M)} \sim r_{fN}^{(M)}$

35

VARIATION CORRECTING UNIT

36

RECEIVE BEAM FORMING UNIT

51

ESTIMATION UNIT

52

AVERAGER

$\phi^{(1)} \sim \phi^{(M)}$

$\theta$

PHASE-VARIATION & ARRIVAL-DIRECTION ESTIMATING UNIT

34

## FIG. 10

$r_{f1}^{(1)} \sim r_{fN}^{(1)}$

$r_{f1}^{(2)} \sim r_{fN}^{(2)}$

$r_{f1}^{(M)} \sim r_{fN}^{(M)}$

35

VARIATION CORRECTING UNIT

36

RECEIVE BEAM FORMING UNIT

53

LEVEL MEASUREMENT UNIT

WEIGHTING DECISION UNIT

54

51

ESTIMATION UNIT

55

WEIGHTED-MEAN UNIT

$\phi^{(1)} \sim \phi^{(M)}$

$\theta$

PHASE-VARIATION & ARRIVAL-DIRECTION ESTIMATING UNIT

34

# FIG. 11

$r_{f1}^{(1)} \sim r_{fN}^{(1)}$

$r_{f1}^{(2)} \sim r_{fN}^{(2)}$

$r_{f1}^{(M)} \sim r_{fN}^{(M)}$

35
VARIATION CORRECTING UNIT

36
RECEIVE BEAM FORMING UNIT

FREQUENCY-DIFFERENCE WEIGHTING DECISION UNIT

51
ESTIMATION UNIT

56    57
WEIGHTED-MEAN UNIT

$\phi^{(1)} \sim \phi^{(M)}$

$\theta$

PHASE-VARIATION & ARRIVAL-DIRECTION ESTIMATING UNIT

34

# FIG. 12

$B_1$    $B_2$    $B_F$

$r_{f1}$  $r_{f2}$  $r_{fi}$  $r_{f(i+1)}$  $r_{fj}$    $r_{fN}$

$f_1$ $f_2$ $\cdots$ $f_i$ | $f_{i+1}$ $\cdots$ $f_j$ | $\cdots$ | $f_k$    $f_N$

$\phi^{(1)}_{[1]}$    $\phi^{(1)}_{[2]}$    $\cdots$    $\phi^{(1)}_{[F]}$

$\phi^{(2)}_{[1]}$    $\phi^{(2)}_{[2]}$    $\phi^{(2)}_{[F]}$

$\phi^{(M)}_{[1]}$    $\phi^{(M)}_{[2]}$    $\phi^{(M)}_{[F]}$

FIG. 13

EP 1 744 469 A2

## FIG. 14

$r_{f1}^{(2)}$
$r_{f2}^{(2)}$
$r_{fi}^{(2)}$

CORRECTOR
FOR BAND $B_1$

$61_1$

$35_2$

$\phi_{[1]}^{(2)}$

$r_{f(i+1)}^{(2)}$
$r_{fj}^{(2)}$

CORRECTOR
FOR BAND $B_2$

$61_2$

$\phi_{[2]}^{(2)}$

CORRECTION UNIT
FOR ANTENNA 2

$r_{fk}^{(2)}$
$r_{fN}^{(2)}$

CORRECTOR
FOR BAND $B_F$

$61_F$

$\phi_{[F]}^{(2)}$

# FIG. 15

# FIG. 16

EP 1 744 469 A2

# FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001156688 A

**Non-patent literature cited in the description**

- **O.L. FROST.** An algorithm for linearly constrained adaptive array processing. *Proc. IEEE,* 1975, vol. 60 (8), 926-935

- **J. XIN ; H. TSUJI ; Y. HASE ; A. SANO.** Array beamforming based on cyclic signal detection. *Proc. IEEE 48th Vehicular Technology Conference,* 1998, 890-984